(19) Europäisches Patentamt
European Patent Office
Office européen des brevets

(11) **EP 4 741 819 A1**

(12) **EUROPEAN PATENT APPLICATION**
published in accordance with Art. 153(4) EPC

(43) Date of publication:
**13.05.2026 Bulletin 2026/20**

(21) Application number: **24835819.4**

(22) Date of filing: **03.06.2024**

(51) International Patent Classification (IPC):
*G01N 30/86* (2006.01)  *G01M 3/26* (2006.01)
*G01M 3/28* (2006.01)  *G01N 30/02* (2006.01)
*G01N 30/26* (2006.01)  *G01N 35/00* (2006.01)

(52) Cooperative Patent Classification (CPC):
**G01M 3/26; G01M 3/28; G01N 30/02; G01N 30/26; G01N 30/86; G01N 35/00**

(86) International application number:
**PCT/JP2024/020268**

(87) International publication number:
**WO 2025/009299 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.07.2023 JP 2023111777**

(71) Applicant: HITACHI HIGH-TECH CORPORATION
Tokyo 105-6409 (JP)

(72) Inventors:
• **NOGAMI, Makoto**
  **Tokyo 105-6409 (JP)**
• **TOBITA, Midori**
  **Tokyo 105-6409 (JP)**
• **HARADA, Yushi**
  **Tokyo 105-6409 (JP)**

(74) Representative: **MERH-IP Matias Erny Reichl Hoffmann**
**Patentanwälte PartG mbB**
**Paul-Heyse-Straße 29**
**80336 München (DE)**

(54) **LIQUID CHROMATOGRAPH DEVICE AND METHOD FOR DETECTING ABNORMALITY THEREOF**

(57) The present invention provides a liquid chromatograph device capable of minimizing sudden stop due to failure of the device, economic damage due to opportunity loss, and damage to a user. The liquid chromatograph device includes: a sipper 102 configured to aspirate a sample; a syringe 103 configured to generate a negative pressure in a first pipe 104 communicated with the sipper 102 to aspirate the sample into the sipper 102; a pump 105 configured to pump a diluent for diluting the sample; a mixing portion 109 configured to accommodate and mix the diluent pumped by the pump 105 and the sample aspirated by the sipper 102; a second pipe 106 communicating the pump 105 with the mixing portion; a first pressure sensor 107 disposed in the first pipe 104 and configured to detect a pressure in the first pipe 104; a second pressure sensor 108 disposed in the second pipe 106 and configured to detect a pressure in the second pipe 106; and a verification unit 114 configured to verify, when the first pressure sensor 107 detects an abnormality in the pressure, the abnormality based on the pressure detected by the second pressure sensor 108.

[FIG. 1]

**Description**

Technical Field

The present invention relates to a liquid chromatograph device and an abnormality detection method therefor.

Background Art

In inspection centers, university hospitals, or the like, inspections such as immunosuppressive agents, anticancer agents, neonatal metabolic abnormality inspections, and therapeutic drug monitoring (TDM) are performed using a liquid chromatograph mass spectrometer (HPLC/MS). In order to prevent variation in an inspection result, reproducibility and accuracy of a sample introduction (injection) step of introducing a sample into the liquid chromatograph mass spectrometer are important. Here, PTL 1 discloses a technique for detecting a pressure abnormality such as clogging or leakage of a flow path, the technique including a pump pressure sensor that monitors a pressure in the flow path, an injection valve that switches between a liquid feed flow path from a pump and a flow path from a syringe, a sample loop coupled to the injection valve, the syringe that aspirates or discharges a sample, and a syringe pressure sensor that monitors an aspiration or discharge state of the syringe.

Citation List

Patent Literature

PTL 1: WO2022/230282A

Summary of Invention

Technical Problem

In PTL 1, a verification unit that verifies an abnormality based on a pressure value of the syringe pressure sensor for monitoring the aspiration or discharge state of the syringe when the pump pressure sensor for monitoring the pressure in the flow path detects a pressure abnormality is not provided.
An object of the invention is to provide a liquid chromatograph device and an abnormality detection method for the liquid chromatograph device capable of minimizing, by a predictive diagnosis, sudden stop due to a failure or a defect of a device or a component, economic damage due to opportunity loss, or health and damage to a worker or a user of a product.

Solution to Problem

In order to achieve the above object, the invention is formed as follows.
A liquid chromatograph device includes: a sipper configured to aspirate a sample; a syringe which is a negative pressure generation source that generates a negative pressure in a first pipe communicating with the sipper to aspirate the sample into the sipper; a pump configured to pump a diluent for diluting the sample; a mixing portion configured to accommodate and mix the diluent pumped by the pump and the sample aspirated by the sipper; a second pipe communicating the pump with the mixing portion; a first pressure sensor disposed in the first pipe and configured to detect a pressure in the first pipe; a second pressure sensor disposed in the second pipe and configured to detect a pressure in the second pipe; and a verification unit configured to verify, when the first pressure sensor detects an abnormality in the pressure, the abnormality based on the pressure detected by the second pressure sensor.
An abnormality detection method for a liquid chromatograph device includes: generating a negative pressure in a first pipe communicating with a sipper and aspirating a sample into the sipper; mixing, by the mixing portion, a diluent pumped by the pump via a second pipe communicating the pump with the mixing portion and the sample aspirated by the sipper; and supplying the diluent and the sample that are mixed to a separation portion, in which when a first pressure sensor for detecting a pressure in the first pipe detects an abnormality in the pressure, the abnormality is verified based on a pressure detected by a second pressure sensor for detecting the pressure in the second pipe.

Advantageous Effects of Invention

According to the invention, it is possible to provide a liquid chromatograph device and an abnormality detection method for the liquid chromatograph device capable of minimizing, by a predictive diagnosis, sudden stop due to a failure or a defect of a device or a component, economic damage due to opportunity loss, or health and damage to a worker or a user of a product.

Brief Description of Drawings

FIG. 1 is a schematic diagram of a liquid chromatograph mass spectrometer.
FIG. 2 is a schematic diagram of an abnormality detection process during sample aspiration.
FIG. 3 is a diagram showing pressure profiles before and after a smoothing process.
FIG. 4 is a schematic diagram of baseline correction.
FIG. 5 is a flowchart of an abnormality detection process during sample injection.
FIG. 6 is a schematic view of abnormality detection during the sample injection.

Description of Embodiments

Hereinafter, embodiments of the invention will be described with reference to the drawings.

[Examples]

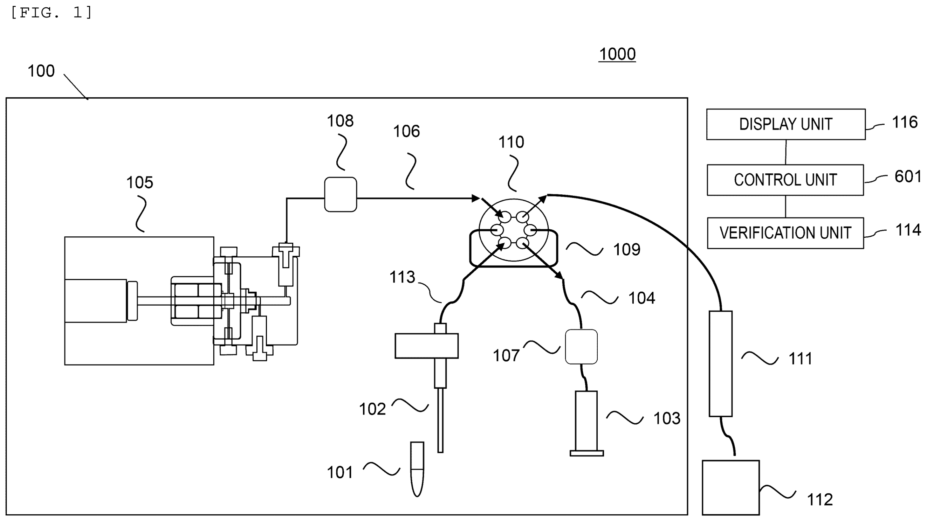

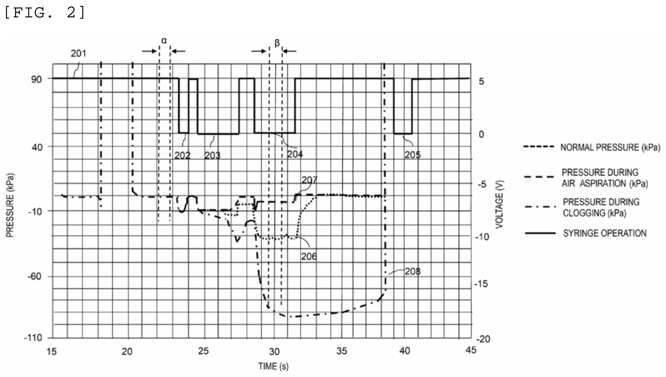

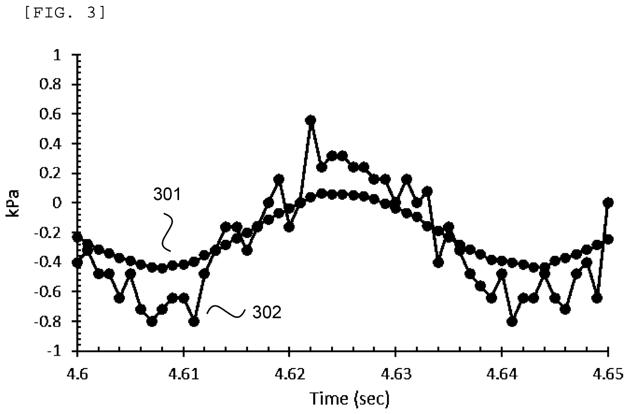

FIG. 1 is a schematic diagram of a liquid chromatograph mass spectrometer (HPLC/MS) 1000.
The liquid chromatograph mass spectrometer 1000 includes an injection portion 100, a separation portion 111 that separates a sample, a detection unit 112, a verification unit 114, a control unit 601, and a display unit 116. The separation portion 111 includes a column.
The control unit 601 controls operations of the display unit 116, the injection portion 100, the separation portion 111, and the detection unit 112. The verification unit 114 detects an abnormality of a component of the injection portion 100 based on pressures detected by a pressure sensor 107 (first pressure sensor) and a pressure sensor 108 (second pressure sensor) described later, and predicts occurrence of a failure or the like.
The injection portion 100 includes a sipper 102, a syringe 103, a first pipe 104, a pump 105, a second pipe 106, the pressure sensor 107 provided in the first pipe 104 to detect a pressure in the first pipe 104, the pressure sensor 108 provided in the second pipe 106 to detect a pressure in the second pipe 106, a sample loop 109, and a valve 110. The syringe 103 is a negative pressure generation source that generates a negative pressure in the first pipe 104. The sipper 102 communicates with the first pipe 104, and the negative pressure is generated in the first pipe 104 in order to aspirate a sample into the sipper 102.
A sample 101 is aspirated by the sipper nozzle 102. The sipper 102 is coupled to the valve 110 via a third pipe 113. The syringe 103 is coupled to the valve 110 via the second pipe 104 and the pressure sensor 107. The sample loop 109 is coupled to the valve 110.
A switching position of the valve 110 includes a position 1 and a position 2. At the position 1, the sipper 102 is coupled to the sample loop 109 (mixing portion) and the syringe 103.
At the position 2, a flow path from the pump 105, the sample loop 109, and the separation portion 111 are coupled to each other.
At the position 1, the syringe 103 is driven, and the sample 101 is aspirated from the sipper 102 and introduced into the sample loop 109.
Since the flow path from the pump 105 and the sample loop 109 are coupled to each other at the position 2, the sample 101 introduced into the sample loop 109 at the position 1 is introduced into the separation portion 111. The pump 105 pumps a diluent for diluting the sample.
A liquid chromatograph device includes the injection portion 100, the control unit 601, the verification unit 114, the display unit 116, and the separation portion 111.
Abnormality detection during sample aspiration using the pressure sensor 107 provided in the first pipe 104 will be described with reference to FIGS. 2 and 3. FIG. 2 is a schematic diagram of the abnormality detection during the sample aspiration (a temporal change in a pressure value detected by the pressure sensor 107 provided in the first pipe 104).
The abnormality detection during the sample aspiration in FIG. 2 is performed at the position 1 of the valve 110 described above. An aspiration operation in operations 201 of the syringe 103 includes four steps. The first step includes "air aspiration 202" for separating the sample 101 from an in-pipe solution in order to prevent dilution, the second step includes "sample aspiration 203" for introducing the sample 101 into the pipe, the third step includes "loop aspiration 204" for aspirating air and transferring the sample 101 introduced into the pipe to the sample loop 109, and the fourth step includes "remaining liquid discharge 205" for pushing out the sample 101 remaining in the pipe to the outside of the pipe. The verification unit 114 detects clogging and air aspiration based on pressure profiles at two timings. The first timing is a range $\alpha$ of 500 msec before the start of the "air aspiration 202", and the second timing is a range $\beta$ of 1000 msec to 1500 msec after the start of the "loop aspiration 204".

Pressure data $v_i$ acquired at each timing is analyzed in four procedures. The four procedures are a pressure value conversion process, a smoothing process, a baseline correction process, and a data process for each detection. In the pressure value conversion process, the acquired pressure data $v_i$ is converted into a pressure value $p_{ei}$ in units of kPa.

In FIG. 2, a fine dotted line 206 indicates a pressure profile in a normal state, a normal dotted line 207 indicates a pressure profile during air aspiration, and an alternate long and short dash line 208 indicates a profile during clogging.

In the smoothing process, a moving average $p_{si}$ of the pressure values $p_{ei}$ is calculated using the following Formula (1). FIG. 3 shows an outline of the smoothing process. FIG. 3 shows a pressure profile 301 after the smoothing process and a pressure profile 302 before the smoothing process. An average value of a target point and 10 points before and after the target point (a total of 21 points) is calculated. When i = a, the smoothing process is performed when $a \geq 11$ and $i_{max} - a \geq 10$. However, the smoothing process is not performed on the pressure value $p_{ei}$ that does not satisfy the condition, and data of the region is excluded from the analysis.

[Math. 1]

$$p_{ei} = \frac{1}{21} \sum_{i=a-10}^{a+10} p_{ei} \qquad \cdots \quad (1)$$

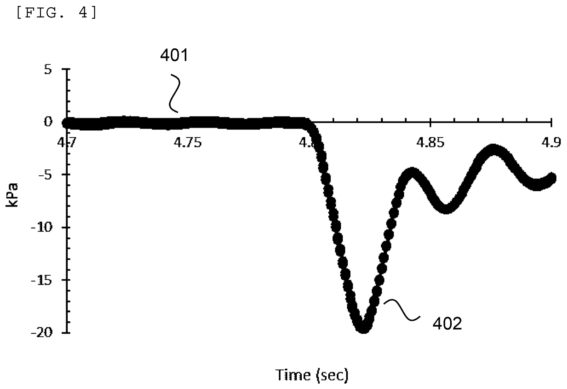

In the baseline correction process, an error of the pressure value in a baseline interval is corrected. The baseline correction process will be described with reference to FIG. 4. FIG. 4 shows a pressure profile 401 before the baseline correction process and a pressure profile 402 after the baseline correction process.

When a trigger point is i = b, the baseline correction is performed. Specifically, a pressure average value in the baseline interval shown in the following Formula (2) is calculated, and a corrected pressure $p_{bi}$ is calculated by subtracting the pressure average value from each data $p_{si}$ after smoothing to perform the correction process. However, when the pressure average value in the baseline interval is an abnormal value (10 kPa or more or less than -10 kPa), the data of the region is excluded from the analysis.

[Math. 2]

$$p_{bi} = p_{si} - \frac{1}{100} \sum_{i=b-100}^{b-1} p_{si} \qquad \cdots \quad (2)$$

The data process for each detection will be described. A pressure average value $Z_{CA}$ in an abnormality detection data region is calculated in the range $\beta$ of 1000 msec to 1500 msec after the start of the loop aspiration 204. Assuming that a pressure average value in a baseline data region is 0 kPa, when the pressure average value is $Z_{CA} < -50$ kPa, it is determined that clogging occurs. When the pressure average value is $-50$ kPa $\leq Z_{CA} \leq -10$ kPa, it is determined that the normal aspiration occurs. When the pressure average value is $Z_{CA} > -10$ kPa, it is determined that the air aspiration occurs. A threshold can be appropriately changed according to environmental conditions such as a temperature and an atmospheric pressure.

A pressure average value $Z_F$ in the abnormality detection data region is calculated in a range of 1000 msec from the start of the remaining liquid discharge. Assuming that the pressure average value in the baseline data region is 0 kPa, when the pressure average value is $Z_F > 100$ kPa, it is determined to be normal. When $Z_F < 100$ kPa, it is determined that the pump 105, which is a gear pump, has a failure in an electromagnetic valve. A threshold can be appropriately changed according to environmental conditions such as a temperature and an atmospheric pressure.

Accordingly, by performing the abnormality detection during the sample aspiration using the pressure sensor 107 provided in the first pipe 104, it is possible to determine clogging, air aspiration, or a failure in the electromagnetic valve of the pump 105. A threshold of the pressure sensor 107 provided in the first pipe 104 in the case of the air aspiration abnormality is $Z_{CA} > -10$ kPa, and the threshold in the normal state is $-50$ kPa $< Z_{CA} < -10$ kPa. A typical pressure value in a normal state is $-30$ kPa $< Z_{CA} < -20$ kPa, and in a case of a calculation value of about $-20$ kPa $< Z_{CA} < -10$ kPa, there is a possibility that a small number of air bubbles are mixed in the first pipe 104 although it is not an air aspiration abnormality in a case where the solution in the first pipe 104 is completely empty.

Therefore, the accuracy of the abnormality detection is improved by performing not only the abnormality detection during the sample aspiration using the pressure sensor 107 provided in the first pipe 104 but also abnormality detection by another method. As another method, a method using the pressure sensor 108 provided in the second pipe 106 will be described.

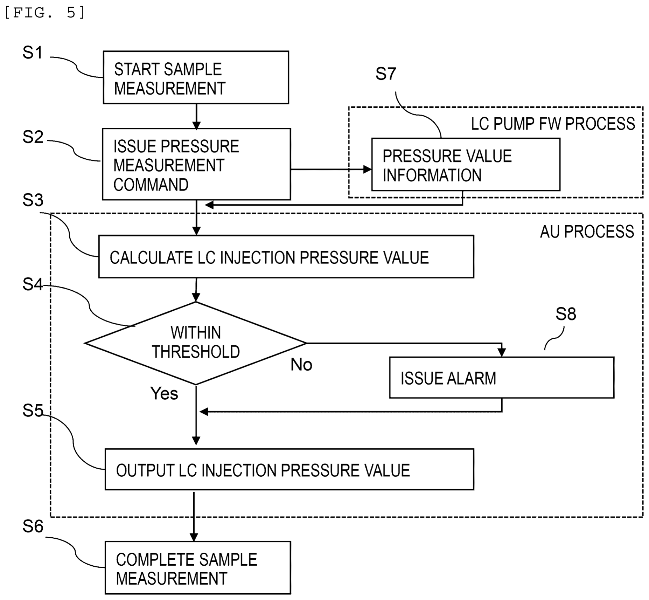

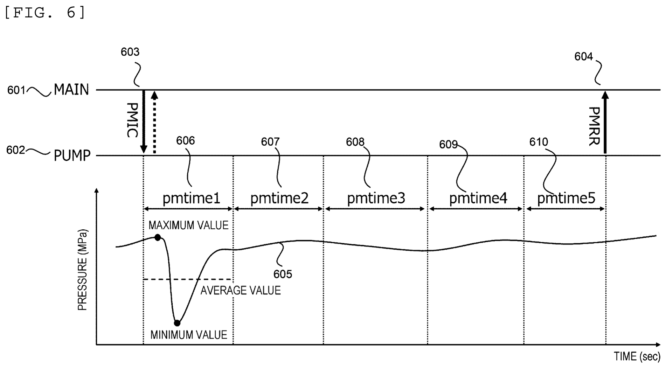

An abnormality detection process during sample injection (supplying a sample accommodated in a sample probe (mixing portion) to the separation portion 111) using the pressure sensor 108 provided in the second pipe 106 will be described with reference to FIGS. 5 and 6. FIG. 5 is a flowchart of the abnormality detection process during the sample injection (the pressure sensor 108 provided in the second pipe 106). FIG. 6 is a schematic diagram of the abnormality detection during the sample injection (the pressure sensor 108 provided in the second pipe 106). In the flowchart of the abnormality detection process during the sample injection in FIG. 5, the abnormality detection process is performed based on the pressure value of the pressure sensor 108 provided in the second pipe 106. A pressure measurement time in which the pressure sensor 108 detects the pressure is started when a sample accommodated in the sample loop 109 as the mixing portion is supplied to the separation portion 111.

When a sample measurement is started in step S1 of FIG. 5, a pressure measurement command is issued from the control unit 601 to the injection portion 100 in step S2. Then, in step S7, pressure value information from the pressure sensor 108 is transmitted to the verification unit 114. Next, in step S3, a pressure value is calculated based on the pressure information from the pressure sensor 108.

Next, in step S4, the verification unit 114 determines whether the calculated pressure value is within a threshold. When the pressure value is not within the threshold, the process proceeds to step S8, and the verification unit 114 transmits, to the control unit 601, information indicating that the pressure value is not within the threshold. According to the information from the verification unit 114, the control unit 601 causes the display unit 116 to display an alarm notifying that an abnormality has occurred during sample injection. Then, the process proceeds to step S5.

When the calculated pressure value is within the threshold in step S4, the process proceeds to step S5, and an injection pressure value is output. Then, the process proceeds to step S6, and the measurement for the sample is completed.

A specific operation will be described.

When the valve 110 is at the position 1, the syringe 103 is driven, and after the sample 101 is introduced from the sipper 102 into the sample loop 109, the valve 110 is switched to the position 2 and the sample measurement is started. At the timing when the sample measurement is started, a pressure measurement command 603 is transmitted from the control unit 601 of the automatic analyzer to a firmware 602 of the pump together with a freely set pressure measurement time and pressure measurement time. After receiving the pressure measurement command 603, the firmware 602 of the pump calculates a maximum value, a minimum value, and an average value of the pressure in each of a pressure measurement time (1) 606, a pressure measurement time (2) 607, a pressure measurement time (3) 608, a pressure measurement time (4) 609, and a pressure measurement time (5) 610, and returns the five sets to the control unit 601 after the end of all the times. Among the maximum values, the minimum values, and the average values of the five sets returned to the control unit 601, a data set corresponding to the measurement time (pmtime 1) 606 is set as a calculation target, and a pressure value $Z_G$ is calculated using the following Formula (3).

$$\text{Maximum value} - \text{minimum value} = Z_G \ (3)$$

(3)

When the calculated pressure value is $Z_G > 15$ MPa, it is determined to be abnormal during the sample injection. The abnormality is a phenomenon that occurs when the valve 110 is switched to the position 2 in a state where the bubbles remains in the sample loop 109 due to the air aspiration abnormality during the sample aspiration. A threshold can be appropriately changed according to environmental conditions such as a temperature and an atmospheric pressure.

When it is determined to be abnormal during the sample injection by the pressure sensor 108 provided in the second pipe 106, an abnormal state is posted on a GUI screen (the display unit 116) of the control unit 601, and a user is notified of the abnormality during the sample injection as a system alarm. At the same time, a data alarm is added to an inspection result of the sample on the GUI screen. The user recognizes that there is an abnormality in inspection data, and reinspects or rejects the data.

On the other hand, when it is determined that the pressure sensor 107 provided in the first pipe 104 has detected an abnormality during sample aspiration, an abnormal state is posted on the GUI screen of the control unit 601, and the user is notified of the abnormality during sample aspiration as a system alarm.

By performing the abnormality detection during the sample aspiration by the pressure sensor 107 provided in the first pipe 104 and the abnormality detection during the sample injection by the pressure sensor 108 provided in the second pipe 106, it is possible to determine whether air aspiration has occurred. A pressure calculation value of the pressure sensor 107 provided in the first pipe 104 is 100 kPa or less, a pressure calculation value of the pressure sensor 108 provided in the second pipe 106 is several MPa or less, there is a pressure difference of about 10 times, and the presence or absence of an abnormality can be more clearly determined.

Pressure information acquired by the pressure sensor 107 provided in the first pipe 104 and the pressure sensor 108 provided in the second pipe 106 is stored in a database of the control unit 601. By performing pressure trend analysis using the information of the two different types of the pressure sensors 107 and 108 and performing abnormal trend analysis for a long period of time, it is possible not only to detect temporary clogging and air aspiration but also to diagnose an operation abnormality and a failure state at an early stage.

Specifically, by analyzing 1) a case of only an abnormality due to the pressure information acquired from the pressure sensor 107 provided in the first pipe 104, 2) a case of only an abnormality due to the pressure information acquired from the pressure sensor 108 provided in the second pipe 106, and 3) a case of both abnormalities due to the pressure sensor 107 provided in the first pipe 104 and the pressure sensor 108 provided in the second pipe 106, it is easy to specify a defective portion in the liquid chromatograph device 1000.

For example, in the case of the abnormality due to the pressure information acquired from the two pressure sensors 107 and 108 of 3), it can be seen that the sample loop 109 or the valve 110, which is a common portion of the first pipe 104 and the second pipe 106, is the defective portion.

In the liquid chromatograph device constituting the liquid chromatograph mass spectrometer 1000, an internal standard substance is dispensed in a preparation step. The internal standard substance to be dispensed is prepared for each measurement target substance contained in the sample 101, and a specified amount of the internal standard substance having a known concentration is dispensed into the sample 101. During the inspection, a QC measurement using a QC sample containing a measurement target substance having a known concentration is periodically performed for quality control.

Therefore, the air aspiration abnormality detection can also be determined based on peak intensities of the chromatograms of the measurement target substance and the internal standard substance output during the QC measurement. The peak intensities of the chromatograms of both the measurement target substance and the internal standard substance, which are obtained when the valve 110 is switched to the position 2 in a state where the bubbles remain in the sample loop 109 due to the air aspiration abnormality occurring during the sample aspiration, are lower than a normal value. When a normal chromatogram intensity is obtained for either the measurement target substance or the internal standard substance, it can be determined that there is an abnormality during dispensing in the preparation step.

Since the example is implemented as described above, it is possible to provide a liquid chromatograph device and an abnormality detection method for the liquid chromatograph device capable of minimizing, by a predictive diagnosis, sudden stop due to a failure or a defect of a device or a component, economic damage due to opportunity loss, or health and damage to a worker or a user of a product.

By such a predictive diagnosis, it is possible to minimize sudden stop due to a failure or a defect of a device or a component, economic damage due to opportunity loss, or health and damage to a worker or a user of a product.

As a feature of an algorithm of syringe aspiration by the pressure sensor 107, it is possible to detect an aspiration abnormality such as clogging and air aspiration by comparing a difference between the pressure information during the loop aspiration and the baseline pressure information before aspiration. At the same time, an injection abnormality can be detected by comparing a difference between a maximum value and a minimum value obtained during the injection in the pressure sensor 108 of the pump 105 with the pressure information in the normal state.

By accumulating the pressure information acquired from the two pressure sensors 107 and 108 in the database and performing the abnormal trend analysis for a long period of time, it is possible not only to detect temporary clogging and air aspiration but also to diagnose an operation abnormality and a failure state at an early stage.

By using these functions, it is possible to contribute to cost reduction of the liquid chromatograph device and to estimate a cause when an abnormality occurs.

The invention is not limited to the embodiment described above and includes various modifications and combinations without departing from the gist of the invention.

The invention is not limited to having all configurations described in the embodiment described above and includes a configuration in which a part of the configurations is deleted.

Some or all of configurations, functions, or the like described above may be implemented by, for example, designing with an integrated circuit.

The above configurations, functions, or the like may be implemented by software by a processor interpreting and executing a program for implementing each function.

Reference Signs List

| | |
|---|---|
| 100: | injection portion |
| 101: | sample |
| 102: | sipper |
| 103: | syringe |
| 104: | first pipe |
| 105: | pump |

106:    second pipe
107:    pressure sensor provided in first pipe
108:    pressure sensor provided in second pipe
109:    sample loop (mixing portion)
110:    valve
111:    separation portion
112:    detection unit
113:    third pipe
114:    verification unit
116:    display unit
201:    syringe aspiration
202:    during air aspiration
203:    during sample aspiration
204:    during loop aspiration
205:    during remaining liquid discharge
206:    pressure profile in normal state
207:    pressure profile during air aspiration
208:    pressure profile during clogging
301:    pressure profile before smoothing
302:    pressure profile after smoothing
401:    pressure profile before baseline correction
402:    pressure profiles before and after baseline correction
601:    control unit
602:    pump firmware
603:    pressure measurement command
604:    pressure result command
605:    pressure profile
606:    pressure measurement time 1
607:    pressure measurement time 2
608:    pressure measurement time 3
609:    pressure measurement time 4
610:    pressure measurement time 5
1000:   liquid chromatograph mass spectrometer

**Claims**

1. A liquid chromatograph device comprising:

    a sipper configured to aspirate a sample;
    a syringe which is a negative pressure generation source that generates a negative pressure in a first pipe communicating with the sipper to aspirate the sample into the sipper;
    a pump configured to pump a diluent for diluting the sample;
    a mixing portion configured to accommodate and mix the diluent pumped by the pump and the sample aspirated by the sipper;
    a second pipe communicating the pump with the mixing portion;
    a first pressure sensor disposed in the first pipe and configured to detect a pressure in the first pipe;
    a second pressure sensor disposed in the second pipe and configured to detect a pressure in the second pipe; and
    a verification unit configured to verify, when the first pressure sensor detects an abnormality in the pressure, the abnormality based on the pressure detected by the second pressure sensor.

2. The liquid chromatograph device according to claim 1, wherein
the verification unit verifies the abnormality based on a differential pressure between a pressure average value of the first pressure sensor in a baseline interval and a pressure average value during introduction of the sample into the mixing portion.

3. The liquid chromatograph device according to claim 1 or 2, wherein
the verification unit verifies the abnormality based on a differential pressure between a maximum value of a pressure value of the second pressure sensor in a pressure measurement time and a minimum value of the pressure value.

4. The liquid chromatograph device according to claim 1, wherein
by the verification unit, a pressure difference of about 10 times is present between a differential pressure between a pressure average value of the first pressure sensor in a baseline interval and a pressure average value during introduction of the sample into the mixing portion, and a differential pressure between a maximum value of a pressure value of the second pressure sensor in a pressure measurement time and a minimum value of the pressure value.

5. The liquid chromatograph device according to claim 3, wherein
by the verification unit, a pressure difference of about 10 times is present between the differential pressure between the pressure average value of the first pressure sensor in the baseline interval and the pressure average value during introduction of the sample into the mixing portion, and the differential pressure between the maximum value of the pressure value of the second pressure sensor in the pressure measurement time and the minimum value of the pressure value.

6. The liquid chromatograph device according to claim 1, further comprising:

   a separation portion configured to separate the sample, wherein
   pressure measurement in which the second pressure sensor detects the pressure is started when the sample accommodated in the mixing portion is supplied to the separation portion.

7. The liquid chromatograph device according to claim 1, wherein
the verification unit detects air aspiration of the sample or clogging in the first pipe based on a pressure value detected by the first pressure sensor, and detects the air aspiration of the sample based on the pressure detected by the second pressure sensor.

8. The liquid chromatograph device according to claim 1, further comprising:
a display unit configured to display, in accordance with information from the verification unit, an alarm notifying that the abnormality occurred.

9. An abnormality detection method for a liquid chromatograph device, comprising:

   generating a negative pressure in a first pipe communicating with a sipper and aspirating a sample into the sipper;
   mixing, by the mixing portion, a diluent pumped by a pump via a second pipe communicating the pump with the mixing portion and the sample aspirated by the sipper; and
   supplying the diluent and the sample that are mixed to a separation portion, wherein
   when a first pressure sensor for detecting a pressure in the first pipe detects an abnormality in the pressure, the abnormality is verified based on a pressure detected by a second pressure sensor for detecting the pressure in the second pipe.

10. The abnormality detection method for a liquid chromatograph device according to claim 9, wherein
the abnormality is verified based on a differential pressure between a pressure average value of the first pressure sensor in a baseline interval and a pressure average value during introduction of the sample into the mixing portion.

11. The abnormality detection method for a liquid chromatograph device according to claim 9 or 10, wherein
the abnormality is verified based on a differential pressure between a maximum value of a pressure value of the second pressure sensor in a pressure measurement time and a minimum value of the pressure value.

12. The abnormality detection method for a liquid chromatograph device according to claim 9, wherein
a pressure difference of about 10 times is present between a differential pressure between a pressure average value of the first pressure sensor in a baseline interval and a pressure average value during introduction of the sample into the mixing portion, and a differential pressure between a maximum value of a pressure value of the second pressure sensor in a pressure measurement time and a minimum value of the pressure value.

13. The abnormality detection method for a liquid chromatograph device according to claim 11, wherein
a pressure difference of about 10 times is present between the differential pressure between the pressure average value of the first pressure sensor in the baseline interval and the pressure average value during introduction of the sample into the mixing portion, and the differential pressure between the maximum value of the pressure value of the second pressure sensor in the pressure measurement time and the minimum value of the pressure value.

14. The abnormality detection method for a liquid chromatograph device according to claim 9, wherein pressure measurement in which the second pressure sensor detects the pressure is started when the sample accommodated in the mixing portion is supplied to the separation portion that separates the sample.

15. The abnormality detection method for a liquid chromatograph device according to claim 9, wherein air aspiration of the sample or clogging in the first pipe is detected based on a pressure value detected by the first pressure sensor, and the air aspiration of the sample is detected based on the pressure detected by the second pressure sensor.

16. The abnormality detection method for a liquid chromatograph device according to claim 9, further comprising: displaying an alarm notifying that the abnormality occurred.

[FIG. 1]

1000

100

108

106

110

105

109

104

113

102

107

103

101

111

112

DISPLAY UNIT — 116

CONTROL UNIT — 601

VERIFICATION UNIT — 114

EP 4 741 819 A1

10

[FIG. 2]

[FIG. 3]

[FIG. 4]

[FIG. 5]

S1 — START SAMPLE MEASUREMENT

S2 — ISSUE PRESSURE MEASUREMENT COMMAND

S7 — LC PUMP FW PROCESS
PRESSURE VALUE INFORMATION

S3 — AU PROCESS
CALCULATE LC INJECTION PRESSURE VALUE

S4 — WITHIN THRESHOLD

No

S8 — ISSUE ALARM

Yes

S5 — OUTPUT LC INJECTION PRESSURE VALUE

S6 — COMPLETE SAMPLE MEASUREMENT

[FIG. 6]

## INTERNATIONAL SEARCH REPORT

| International application No. |
| --- |
| **PCT/JP2024/020268** |

**A.    CLASSIFICATION OF SUBJECT MATTER**

*G01N 30/86*(2006.01)i; *G01M 3/26*(2006.01)i; *G01M 3/28*(2006.01)i; *G01N 30/02*(2006.01)i; *G01N 30/26*(2006.01)i; *G01N 35/00*(2006.01)i

FI:    G01N30/86 V; G01M3/26 N; G01M3/28 A; G01N30/02 Z; G01N30/26 L; G01N30/86 D; G01N35/00 F

According to International Patent Classification (IPC) or to both national classification and IPC

**B.    FIELDS SEARCHED**

Minimum documentation searched (classification system followed by classification symbols)

G01N30/86; G01M3/26; G01M3/28; G01N30/02; G01N30/26; G01N35/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022/230282 A1 (HITACHI HIGH-TECH CORPORATION) 03 November 2022 (2022-11-03) paragraphs [0002], [0023]-[0025], [0049], [0053]-[0055], [0059]-[0062], [0068], [0070], [0073], fig. 3 | 1-16 |
| A | JP 2015-114120 A (HITACHI ALOKA MEDICAL LTD.) 22 June 2015 (2015-06-22) paragraphs | 1-16 |
| A | US 2010/0024906 A1 (WATERS INVESTMENTS LTD.) 04 February 2010 (2010-02-04) entire text, all drawings | 1-16 |
| A | US 2013/0327692 A1 (BRANN, J. E.) 12 December 2013 (2013-12-12) entire text, all drawings | 1-16 |
| A | JP 2021-81213 A (SHIMADZU CORPORATION) 27 May 2021 (2021-05-27) entire text, all drawings | 1-16 |

☑ Further documents are listed in the continuation of Box C.          ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
| --- | --- |
| **08 July 2024** | **16 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/020268**

### C. DOCUMENTS CONSIDERED TO BE RELEVANT

| Category* | Citation of document, with indication, where appropriate, of the relevant passages | Relevant to claim No. |
|---|---|---|
| A | US 2022/0229028 A1 (DIONEX SOFTRON GMBH) 21 July 2022 (2022-07-21)<br>entire text, all drawings | 1-16 |
| A | WO 2021/187172 A1 (HITACHI HIGH-TECH CORPORATION) 23 September 2021 (2021-09-23)<br>entire text, all drawings | 1-16 |

Form PCT/ISA/210 (second sheet) (July 2022)

**INTERNATIONAL SEARCH REPORT**
Information on patent family members

International application No.

**PCT/JP2024/020268**

| Patent document cited in search report | Publication date (day/month/year) | Patent family member(s) | Publication date (day/month/year) |
|---|---|---|---|
| WO 2022/230282 A1 | 03 November 2022 | EP 4332579 A1<br>paragraphs [0002], [0023]-[0025], [0051], [0056]-[0058], [0062]-[0065], [0071], [0073], [0076], fig. 3<br>CN 117321421 A | |
| JP 2015-114120 A | 22 June 2015 | (Family: none) | |
| US 2010/0024906 A1 | 04 February 2010 | WO 2007/051113 A2 | |
| US 2013/0327692 A1 | 12 December 2013 | US 2014/0299542 A1<br><br>WO 2012/058516 A1<br>WO 2013/062624 A1<br>CN 103189119 A<br>CN 103907020 A | |
| JP 2021-81213 A | 27 May 2021 | US 2021/0146362 A1<br>entire text, all drawings<br>CN 112798801 A | |
| US 2022/0229028 A1 | 21 July 2022 | DE 102021100915 A1<br><br>CN 114814058 A | |
| WO 2021/187172 A1 | 23 September 2021 | US 2023/0123459 A1<br>entire text, all drawings<br>EP 4122572 A1<br>CN 115176153 A | |

Form PCT/ISA/210 (patent family annex) (July 2022)

**EP 4 741 819 A1**

**REFERENCES CITED IN THE DESCRIPTION**

**Patent documents cited in the description**

- WO 2022230282 A